Europäisches Patentamt

European Patent Office

Office européen des brevets

(11) Publication number: **0 236 412 B1**

# EUROPEAN PATENT SPECIFICATION

(45) Date of publication of patent specification: **29.04.92** (51) Int. Cl.⁵: **G06F 1/00**

(21) Application number: **86905362.9**

(22) Date of filing: **11.09.86**

(86) International application number:
**PCT/GB86/00541**

(87) International publication number:
**WO 87/01835 (26.03.87 87/07)**

(54) **SECURE COMPUTER SYSTEM.**

(30) Priority: **12.09.85 GB 8522569**

(43) Date of publication of application:
**16.09.87 Bulletin  87/38**

(45) Publication of the grant of the patent:
**29.04.92 Bulletin  92/18**

(84) Designated Contracting States:
**GB LU NL SE**

(56) References cited:
**EP-A- 0 128 672
EP-A- 0 135 422
WO-A-85/03785
US-A- 4 377 852**

**Computer, volume 17, no. 3, March 1984, (Long Beach, Ca., US), "Security device eliminates passwords and encryption", page 99**

**IBM Technical Disclosure Bulletin, volume 27, no. 4B, September 1984, (Armonk, US),**

Abernathy et al.: "access protection mechanism", pages 2681-2682

IBM Technical Disclosure Bulletin, volume 18, no. 10, March 1976, (Armonk, US), Simpson et al.: "Unauthorized use protection for a computer", pages 3197-3198

(73) Proprietor: **PHILIPSZ, Basil Eliseus
4A Erlington Avenue Firswood
Manchester M16 0FW(GB)**

(72) Inventor: **PHILIPSZ, Basil Eliseus
4A Erlington Avenue Firswood
Manchester M16 0FW(GB)**

(74) Representative: **Allman, Peter John et al
MARKS & CLERK Suite 301 Sunlight House
Ouay Street
Manchester M3 3JY(GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services
(-/2.17/2.0)

**Description**

The present invention relates to a secure computer system which is protected against unauthorised access or use via a terminal to the system, the terminal incorporating a display screen and a conventional keyboard for entering data to the system. The invention more particularly concerns a system whereby the user is provided with a responder unit which accepts information directly from the terminal display screen and derives from the information a code to be keyed into the terminal so as to permit access to the computer system to be maintained.

The increasing use of computer based systems to process sensitive and valuable operations, such as performing financial transactions or actioning defence engagements, make them a target for fraud or terrorist attack. Large, sophisticated systems must be accessible remotely or locally by legitimate users, usually through terminals incorporating screens (visual display units) with associated keyboards. These operator interfaces, or workstations, can themselves be powerful micro computer systems and can usually be connected to a wide variety of other computer systems or linked through networks to other users and therefore to common accessible databases. Access through these workstations is therefore a goal for the would-be defrauder or terrorist.

Various attempts have been made to cope with the problem of protecting computer systems, especially in preventing the illegal use of software programs. These attempts can be separated into two areas. The first area relates to attempts to prevent the illegal copying of media that contain the software program, for example diskettes, tapes, etc. The second area relates to preventing effective access to systems without authorisation.

With regard to preventing copying, systems have been designed to make the copying media unique or "fingerprinted". Most of the schemes used for the protection of floppy disk media relate to non-standard use of disk formatting. There are several techniques employed, of which the following are typical:

A. One or more tracks may be unformatted.

B. A track sector outside the normal operating system configuration may be used.

C. Tracks may be synchronised with respect to each other by some timing function.

D. Non-standard sector formatting may be used including changes in block check counters.

E. Tracks may be recorded between normal tracks, i.e. half tracks.

F. Non-standard synchronisation codes may be used.

G. Physical fingerprinting, produced, for example, by lasers may be used to encode a particular serial number or pattern.

All of these techniques are aimed at foiling the standard disk copying utilities, but unfortunately there are a wide variety of copy programs available that are designed to operate at the bit level, and are able to read and reproduce such disks. Indeed, one of the flaws of these schemes is that disks need to be readable for use, and provided access to disk driver information has been acquired, such copying is relatively straightforward.

With regard to preventing access, proposals have been made for making the workstation units non-standard by the addition of some further hardware, or a "dongle". The dongle is carried by the user and must be plugged into the workstation for it to operate. The following schemes are typical of this type of proposal:

The software, while it is running, periodically examines a dongle usually connected to the serial RS232 communications port and confirms its presence and integrity. It may:-

a) have an identification code stored within the dongle which the software reads to verify,

b) require an encrypted handshake, where the program outputs parameters to the dongle and receives a scrambled version back,

c) utilise a control path table stored in the dongle so that the program can interrogate the dongle for implementing its procedure linking or dispatch control,

d) need a block of code contained in the dongle, which may be read into the main memory for execution.

Unfortunately, duplicating a dongle, or simulating its effect, is in most cases extremely trivial and really affords little protection. A further enhancement of this dongle approach is to actually attach an additional processor together with suitable encryption and decryption algorithms such that the main processor requires the dongle to execute part of the program. In this case, part of the program is loaded into the dongle's own memory or processing system.

2

The disadvantages of the approaches outlined above are that they cannot make use of a large installed base of dumb workstations. Further, they are specific to hardware implementations or operating system implementations. Moreover, they do not provide that other workstations linked to the protected workstation in the form of local area networks can be accommodated, except by restricting the very benefits of such networks; that is to say, common access to programs and data on other workstations.

Other proposals have been made for preventing unauthorised access. For example users are given passwords, which are not displayed at the workstation, in an attempt to protect against unauthorised use of programs. The exposure of such systems to fraud and invasion is well known, and indeed any system which relies on information learnt by the user, for example, password procedure, is essentially vulnerable.

A further proposal has been made to avoid the need for users to learn passwords. In accordance with this proposal users are equipped with deciphering units. When access to a system is requested, a code is displayed on the screen and keyed by the user into the deciphering unit which then produces a further code derived from the keyed in data using a suitable algorithm. The user then keys the further code into the system. The codes must necessarily be short in order that the whole process of keying-in, display and final keying-in does not become unacceptably cumbersome and time consuming. This brevity makes deciphering the relationship between displayed codes and derived codes easy to discover.

Published International Patent Specification No. WO-A-85/03785 describes a system for controlling access to a computer in which users are provided with responders adapted to accept information directly from a display screen. An access code is calculated by the responder from the information and keyed into the computer by the user. The relationship between information accepted by the responder and the calculated code is however predetermined at the time a responder is issued to an authorized user and thus after issue the access control system cannot alter the operation of the responder. The responder is thus equivalent to any other "key" which is used in an attempt to control access.

Recently developments have occurred to enable persons to gain access to systems only if they are in possession of magnetically encoded plastic cards. Such systems of course require readers to enable the encoded information to be read off the magnetic strip incorporated in the cards, and indeed some have rewrite facilities, so that the information can be altered. This kind of protection suffers in exactly the same manner as the disk fingerprinting protection referred to above; that is to say, it requires a reader unit, which can be replicated, e.g. in the form of magnetic inductance bridges. It is possible to a steal a valid card, construct a reader to read the information and then produce forged cards.

European Patent Specification No. EP-A-0135422 describes a method of ensuring only authorised access to a computer system in which the system periodically transmits an interrogation code to a security device. Only if the security device generates the correct response is the operation of the system permitted to continue. Thus the system periodically rechecks the users access authority but the security device is again equivalent to a single "key".

It is an object of the present invention to obviate or mitigate the problems outlined above.

According to the present invention, there is provided a secure computer system, comprising at least one terminal incorporating a display screen and a keyboard, means to suspend access to the system from the terminal until a user keys in a code via the keyboard, means for displaying on the display screen information from which the code can be derived when it is required by the system for the code to be keyed in to permit access to the system, and at least one responder unit for detecting the displayed information, deriving the code from the detected information, and displaying the derived code to enable the user to key in the code, characterised in that the responder comprises a memory the content of which is electrically changeable, the memory storing data upon which depends the relationship between the derived code and the displayed information, and means operating in response to the detected displayed information for altering said data stored in the memory.

Means may be provided for initiating interrogation routines to suspend access to the system during the course of a session of use of the system, each interrogation routine causing the displaying means to display information on the screen and preventing access to the system until a code derivable from the displayed information by the responder unit has been keyed in. Interrogation routines may be initiated at random intervals.

A session generation number may be stored within the responder unit and within the computer system, the stored session generation numbers being incremented on each exchange of information between the responder unit and the system resulting from initiation of an interrogation routine, and means being provided to deny access to the system if there is a discrepancy between the two stored session generation numbers. Monitoring routines may be initiated to validate that the interrogation routines are present and operational.

The responder unit can comprise memory for storing information related to the permitted access to the system of an authorised user of the responder unit, and means for initiating an interrogation routine when any one of a predetermined series of access requests is made from the terminal, the initiated interrogation routine causing the displaying means to display information on the screen and preventing access to the system until a code derivable from the displayed information in conjunction with data associated with permitted access information stored in the responder unit has been computed by the responder unit and the resulting displayed code has been keyed in.

The responder unit can comprise light sensitive receptors for detecting changes in the illumination level of a display screen against which the responder unit can be held, at least one of the light sensitive receptors generating a clock signal which is used to gate the output of the or each of the other light sensitive receptors.

The responder unit can comprise a sealed enclosure, means for detecting opening of the enclosure, and means responsive to detection of opening of the enclosure to erase data stored in the responder unit upon which data the relationship between displayed information and the code which can be derived from that information depends.

Embodiments of the present invention will now be described, by way of example, with reference to the accompanying drawings, in which:

Figs. 1 to 4 respectively illustrate in schematic form the structure of a single terminal microcomputer system, a multi-terminal system, a local network system, and a system of interconnected networks, the present invention being applicable to each type of system;

Fig. 5 schematically illustrates a system embodying the present invention;

Fig. 6 schematically illustrates the external form of a detector device (hereinafter referred to as a responder) embodying the invention;

Fig. 7 schematically illustrates the circuits incorporated in the responder;

Fig. 8 schematically illustrates the relationship between code information on the screen of a terminal and the responder;

Fig. 9 schematically illustrates a circuit for adjusting the gain of the detector in the responder;

Figs. 10 to 13 illustrate examples of flowcharts that can be used to describe the operation of a system embodying the invention; and

Figs. 14 and 15 illustrate the allocation of access privilege data to memory in a responder unit.

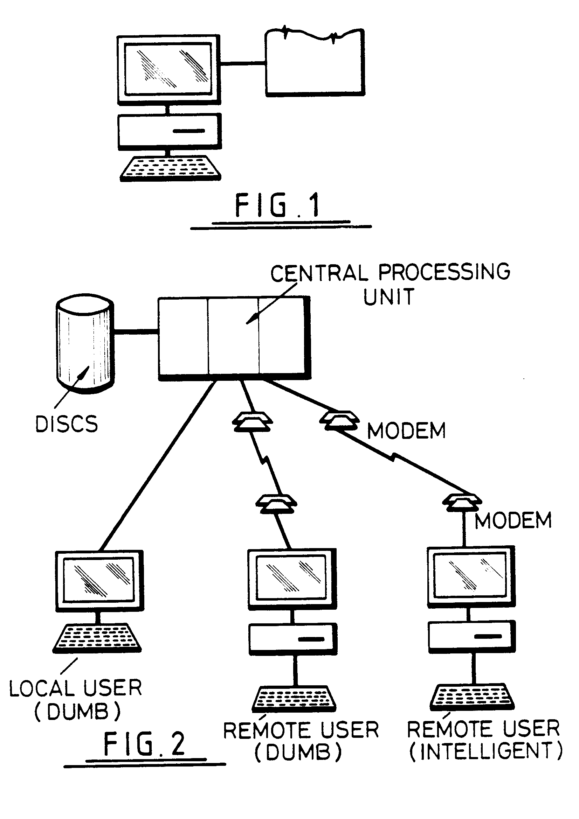

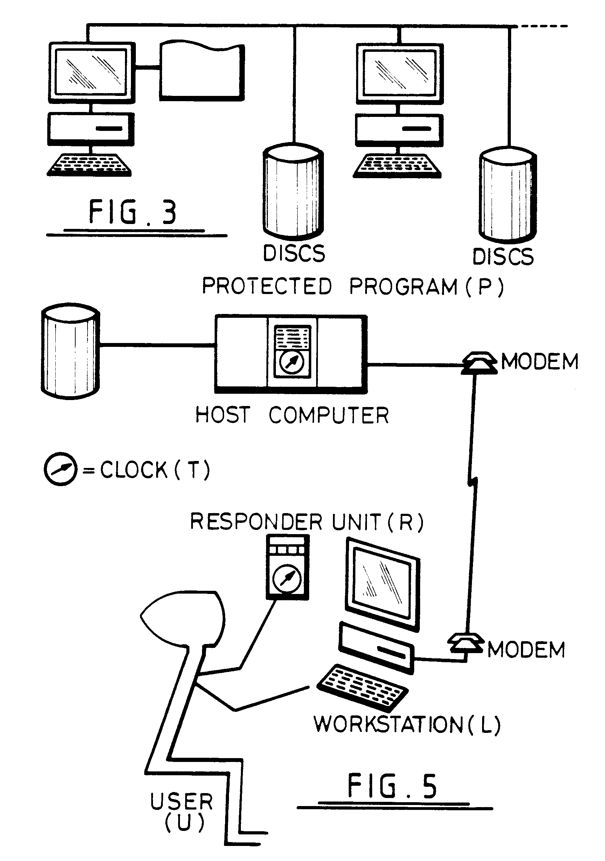

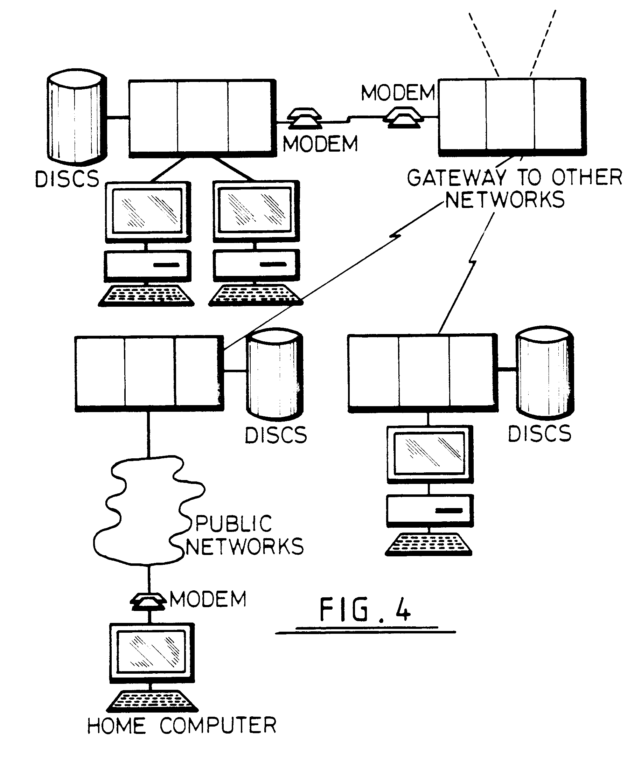

Referring to Figs. 1 to 4, four computer system configurations are illustrated in each of which it is desirable to control access to the system and to present unauthorised copying of software. The present invention is applicable to any of the illustrated configurations or to any other configuration where the system comprises a screen on which data is displayed by the system.

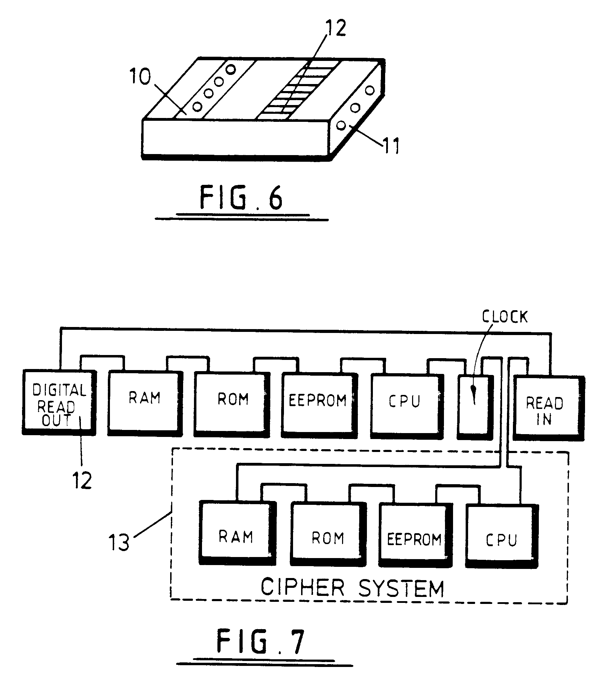

Referring now to Fig. 5, this illustrates in schematic form one simple embodiment of the invention. A user U sits at a workstation L and seeks to access a host computer to which the workstation is linked. The host computer stores information which is encrypted and transmitted to the workstation whenever an attempt is made to access the system from that workstation by either an authorised or an unauthorised person.

The information is transmitted in a form such that a representation of it appears on the workstation screen at a predetermined position. The user holds a responder unit to that part of the screen which detects and decodes the encrypted information and generates a code specific to that particular user's responder. Thus, although say three people are authorised to use a particular workstation, and the same information is transmitted to the terminal whichever of them seeks access to it, each user will be provided with a responder which will generate a code different from the others. When the code is displayed to the user by his responder, the user keys the code into the terminal thereby identifying the user to the system as the person to whom the particular responder has been issued. The system includes a local database storing data indicating what parts of the system are accessible to each authorised user and on the basis of this stored data decides what parts of the system are accessible to the user at the time (indicated by clock T) at which access is requested. Thus, different users can be given different levels of access. An unauthorised user who has no responder, or has a responder not authorised at the particular workstation, will not be able to ascertain the codes allocated to authorised users and will simply be denied access by the host computer.

The responder unit accepts data directly from the screen and can do this at a very high rate compared with for example manual keying in of data. Thus the information read from the screen can contain a volume of data equivalent to for example hundreds of characters from which a code of a few characters is derived for keying in to the system by the user. The large volume of data displayed on the screen makes it very difficult to work out the relationship between the displayed data and the resultant code.

Fig. 6 illustrates one possible external configuration of a responder. Solar cells 10 provide power to the unit, although of course a conventional battery power supply could be provided, and three light sensitive receptors 11 are provided to detect codes flashed on a screen against which in use the end of the responder is pressed. A digital readout 12 presents deciphered codes to the user. Although not shown in Fig. 6, the responder unit may comprise a keypad which enables a user to enter a personal identification number which further refines the security of the system. This allows one responder unit to act for several alternative users authorised to utilise the same physical terminal and responder unit.

Fig. 7 illustrates in block diagram form the electronic components of the responder. Components within the area outlined by broken line 13 define a cipher system which determines the relationship between a detected enciphered signal picked up from a screen and the code displayed by the digital readout 12. The cipher system is in a tamper resistant form which makes it difficult to produce an unauthorised copy of a responder.

It is of course most important that the production of fake copies of responders cannot be easily made. Preferably the responders each incorporate electrically erasable memory components (EEPROMS) which store data essential to the operation of the responder, the memory components being enclosed in a sealed container. An anti-tamper device is provided which detects opening of the container and erases the data stored in the EEPROMS.

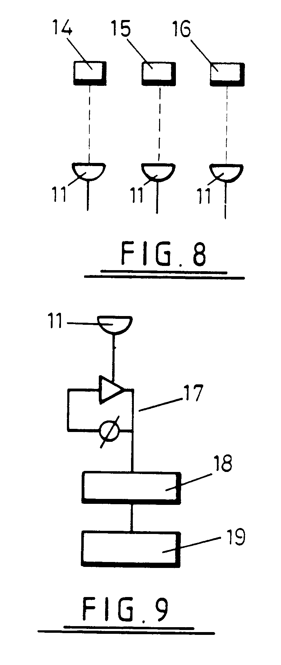

Fig. 8 schematically illustrates how information is displayed on the screen. Three areas of the screen 14, 15 and 16 are used to display information on the screen. A character selected for convenience is flashed on each of the areas. This is possible with the majority of workstations in use at present. The receptors 11 of the responder are positioned adjacent respective areas and each provides a pulsed output corresponding to the flashing of its associated area. The areas 14 and 15 display a two bit parallel code. The area 16 and its associated receptor 11 are used to generate a gating clock signal which is used to control the operation of the responder unit. As shown in Fig. 9, the output of the receptor 11 is applied to a variable gain amplifier 17 which is controlled to compensate for variations in the brightness of the displayed information. The output of the amplifier 17 is applied to a conventional trigger circuit 18 which requires a predetermined level in the output of the amplifier 17 before it in turn provides an output to a read-in circuit 19. Thus trigger circuit 18 delivers a square waveform to the read-in circuit 19 in which the serial stream of information represented by the square wave is converted to parallel binary data. That binary data is then processed by the responder.

The receptors are constructed using light sensitive resistors or transistors as detectors, for example. Such detectors are used in sensing light pulses transmitted through optical fibre cables.

The receptors are extremely sensitive to light pulses and can respond to the high speed raster scan that appears on some visual display monitors. Accordingly the circuitry is designed to ignore raster scan and only trigger on a character pulsed "on" at a particular cursor position on the screen.

When the responder is initialised, the gain of the amplifier 17 is increased until a test pattern displayed on the screen is received satisfactorily. A "ready" message is then displayed on the responder's digital read out to indicate that the responder is set properly for use.

As the responder units detect a prescribed synchronisation pattern and adjust the detector's sensitivity accordingly, and can use an asynchronous signalling method relying on a cursor flashing to receive information from the screen, it is possible that the same responder unit can be used for different workstations, be they dumb terminals, intelligent micro computers or graphic workstations. The arrangement described is moreover adaptable to differing response time environment, e.g. in peak periods, so that it is independent of system performance and can readily be used in networks of networks which typically have variable response times, e.g. delays in satellite communications.

The sub-routines that control responder unit interrogation and monitoring are written in a high level language which can be used with different operating systems on different machines. Thus the hardware responder unit and the software sub-routines can be used wih a variety of machines, or a network of non-homogeneous machines. Moreover, the system is still usable even if some operating systems or hardware is replaced. In other words, the investment in the security system is secure for future changes in hardware and software. This has obvious commercial cost saving benefits.

The issuing of responder units to authorised users should be directly controllable by the system security manager to enable new users to be introduced or the access privileges of existing users to be changed without delay. This can be achieved by issuing blank responder units, i.e. units which do not have any data programmed in the EEPROMS for any particular person. A development system is also provided which will allow the system security manager to program these blank units with the necessary detailed user profiles. A system security manager then will be able to control the programming of the responder units to preferred requirements and be able to issue new responder units when users change functions or change jobs.

The processing of the data received from the screen is performed by the software of the responder. In the arrangement described above a code deciphered from the screen has to be keyed in by the user only when a user attempts to access the system. The present invention does however admit of a much more sophisticated and difficult to circumvent approach. For example, the system software can demand the entry of a code at randomly selected intervals. Existing system software can be relatively easily amended even if a high degree of protection demanding a more sophisticated approach is required. The outline of software providing a high degree of the responder being as outlined above.

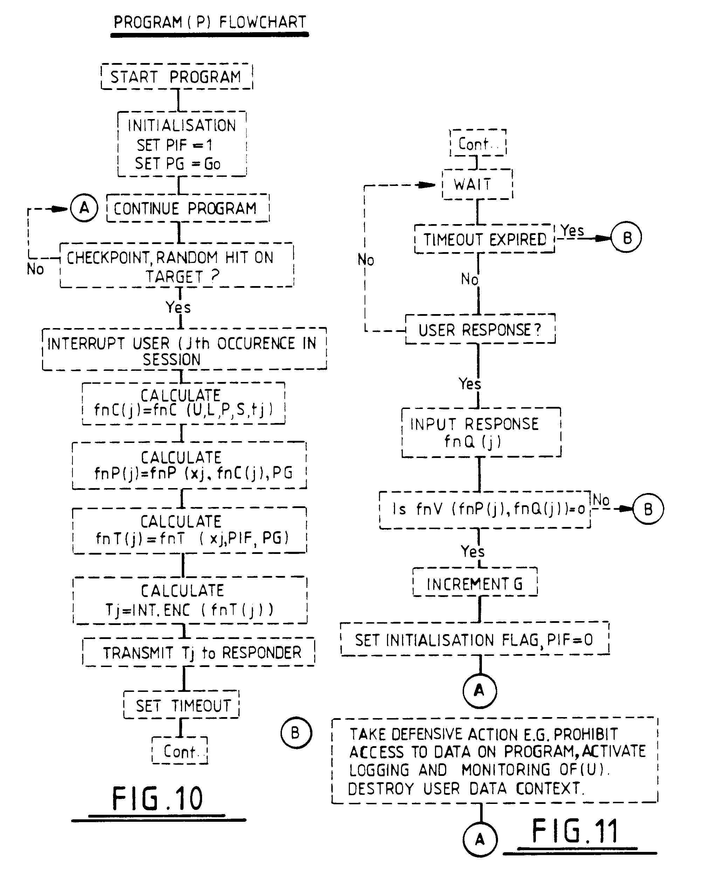

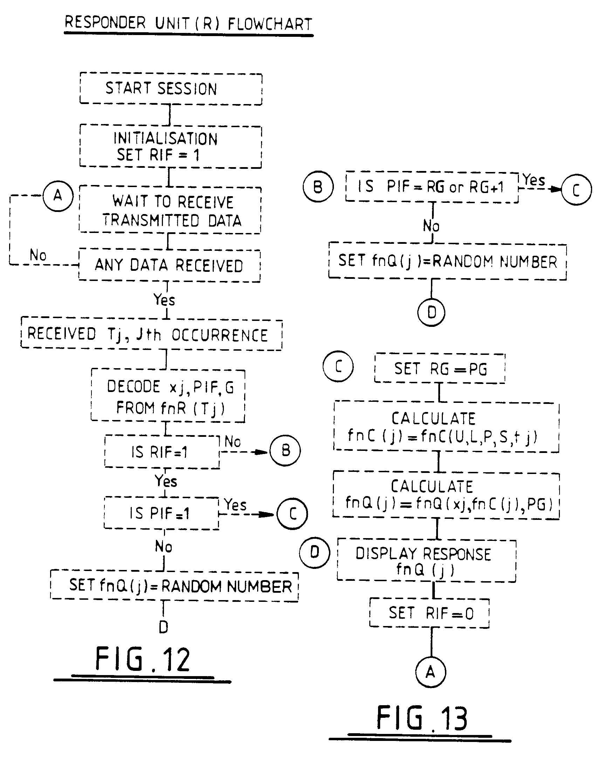

In the system described with reference to the flowcharts of Figs. 10 to 13, software modules are added to the application program (P) to be protected. These modules comprise monitoring components (MON) and interrogation components (INT). An authorised user (U) of this program will possess the appropriate responder unit (R) and will be authorised to activate and execute this program at only one workstation (L). (L) is a standard operator interface, comprising at least a keyboard for entry of data and a visual display screen for the presentation of data. The workstation may be dumb, intelligent, or indeed, a full microcomputer system.

When the user executes program P the (INT) modules are triggered, either at a prescribed event (such as user initiated menu option changes, or file access changes, e.g. from read to write status) or at random occurrences whose incidence can be regulated by the (INT) modules to occur more or less frequently depending on the sensitivity of data being processed or suspicion of attempted fraud. The program execution is stopped and notice is given to the user to prepare to receive transmitted data. A timer is set in the (INT) modules which will time out if the user does not enter data within a pre-set time limit.

The responder unit is held up to the screen and displays a set of digits for the user to enter into the workstation. The program (P) then continues execution. The program proceeds to the next random, or prescribed, occurrence triggering the (INT) modules. If the wrong digits are typed in, or no response is made, then, depending on the circumstances, the program aborts or engages the logging and monitoring of the user (U) or marks certain data inaccessible or, more dramatically, corrupts some or all of the users data context.

The information exchanged between the (INT) modules and the responder (R) is encrypted by use of one of the several standard methods and decrypted accordingly. Preferably different techniques are used in different directions. Further, certain "spoilers" which detect arbitary preset patterns in the data transmitted can be provided as described below to cause a different interpretation and subsequent processing of the data and therefore break up even the difficult encryption ciphers.

The information exchanged between the program and responder updates a session generation number. At the beginning of each session the responder is turned on, which initialises a session generation number stored in the responder. On each exchange of information during the session the generation number is incremented within the responder and in a corresponding store within the system. If in the middle of a first session an attempt was made to use the same responder to gain access to another terminal, the responder unit would have to be initialised or access to the other terminal would be prevented. Once initialised the responder unit could not be used at the next interrogation during the first session as the two stored generation numbers which would be compared would not correspond. Thus, one responder cannot service more than one workstation. This important preferred feature of the invention prevents multiple users exexuting the same program on a local area network or on a multi-user public database without each of them having their own responder unit.

The information exchanged contains data based on random numbers and this significantly complicates attempts to decode the dialogue.

The monitoring routines (MON) are designed to prevent the program (P) being bypassed at the (INT) routines sections of code by central site programmers with access to debug utilities. The (INT) routines are triggered by random occurences, or "checkpoints". Similar checkpoints also trigger internal (MON) routines to validate the test areas of code. It is envisaged that several distinct routines can each be used with the target program and that the choice is determined by an independent manager other than the system manager. Thus, a typical program will have programmers developing the program; a system manager or supplier of protection services inserting (INT) routines, and an independent manager choosing (MON) routines.

An ingredient of the (INT) routines are checks on the tables for access status privileges, i.e. determining which user at which location can use which program or database with which access status privileges.

We will assume that certain mathematical functions (fn) have been determined prior to programming the (INT) and (MON) routines and the responder unit microprograms. In order to simplify the explanation of the flow charts of Figs. 10 to 13 convenient mnemonic variables are defined below:

U = Authorised User Number

L = Workstation Number

P = Protected Program Identification Number

S = Access Status Code Number

J = Jth Occurrence of Random Checkpoint

IF = Initialisation Flags (1 = to be initialised, O = has been initialised):

PIF = Program Initialisation Flag

RIP = Responder Initialisation Flag

t/o = Timeout Period

tj = Time slot computed by program and responder such that they can both obtain the same time measure if the responder calculates within the t/o period after the program calculates. For example, if the timeout was 5 seconds and the slots measured were in minutes, then the program would calculate tj as the previous minute except if it was 5 seconds to a new minute, in which case it would wait 5 seconds before recalculating.

{T } = Set of time periods in which operation is valid. This acts as the time mask to allow access only at certain periods. This could be used to limit access for temporary use, e.g. for one month or shift use, e.g. mornings only.

xj = Random number associated with Jth checkpoint resulting in Program interruption and responder interrogation.

Go = Random number associated with initialisation checkpoint, i.e. at start of the session between user (U) and program (P).

G = Session Generation Numbers:

PG = Program Generation Number

RG = Responder Generation Number Let R denote the real numbers and fn : R[m] -> R[n] be mathematical functions predetermined before programming the (INT) and (MON) routines in (P) and the microprogram in (R). We assume that these functions have been chosen appropriately.

fnC : R[5] -> R[1]

fnP : R[3] -> R[1]

fnQ : R[3] -> R[1]

fnV : R[2] -> R[1]

fnT : R[3] -> R[3]

fnR : R[3] -> R[3] (such that fnR(fnT) = 1)

INT.ENC, INT. DEC, RES. ENC, RES. DEC

are suitable encyrption and corresponding decryption functions R[1] -> R[1] such that INT.DEC INT. ENC = 1, RES.DEC RES.ENC = 1, for example, particular implementations of public key cryptography as suggested by Rivest, Shamir and Adleman in 'A Method for obtaining Digital Signatures and Public Key Cryptosystems' Communications of ACM Vol 21, No: 2, February 1978 page 120.

The first component that needs describing concerns the conditions at which the (INT) routines are activated and action the dialogue between the program and responder. These conditions are determined by choice and can include prescribed events such as menu option changes requested by the user, or requests for particular access rights, e.g. WRITE access to a file. As a further important feature of the invention they can also include random occurrences at certain checkpoints, which are interspersed within the program logic. For example, a particular checkpoint could check that two particular digits of a random generated number were equal to a predefined 2 digit target number. If they matched, this checkpoint would trigger an (INT) routine. Several groups of checkpoints may be employed within the program, each group having a different statistical likelihood of yielding a "hit". These checkpoints and (INT) routines could be spread liberally throughout the program code making isolation of every possible occurrence a difficult task for a central sit programmer seeking to circumvent the system protection.

During the interaction between program and responder, calculations are made involving the user (U), location (L), program (P), status code access (S) and time slot (tj). The program can verify by user prompting or operating system means, U,L,P and S at the time of program execution while the responder unit has these arguments preprogrammed. Although not explicit in the flowchart, both program and responder calculate tj and verify against a time mask (T) to determine whether the proposed interaction is valid for time slot tj.

A timer is set to ensure a response is forthcoming within a limited period and no multiple attempts to enter data are permitted except for one extra confirmation to check for incorrect data keying (by the user) of the number displayed by the responder unit. Multiple "hackers" attempts will not be allowed and the first failure will trigger defensive action by the program. Again, although not explicit in the flowcharts, defensive measures may be set up in the responder unit which expect received numbers Tj yielded via fnR to be in a "footprint" of numbers. Any divergence will cause the normal calculations to be bypassed and instead random numbers to be displayed. Repeated attempts will cause key memory corruption - a self destruct mechanism. Thus multiple attempts at deductive "guesses" at both program or responder will initiate defensive action.

It can therefore be readily seen that the normal user is permitted access provided the user, location, program, access privileges and time slot are all valid.

Moreover, since the generation numbers are transmitted and checked during the interaction, each session between the program and the user maintains a synchronised dialogue. It is therefore impossible for one responder unit to simultaneously service two or more executions of the program at other terminals. Thus multi-user networks can be made secure.

The difficulty in decoding the encryption process is known to be proportional to the length of the key chosen. However, in the present system large keys are not required in order to have an effective cipher system, since by prudent choice of the function fnT so that it contains a large portion of redundant data and because the variables xj, PG are random, there is a large inbuilt statistical "noise" level in the figures transmitted by the (INT) routines. Moreover, by employing the hardware spoiler techniques referred to below an excellent cipher system can be configured for this type of limited interaction without involving considerable data processing overheads.

As described above, at user initiated request, usually on system start-up, the program (P) will send a "test pattern" broadcast known to the responder unit. The self compensating circuit (Fig. 9) incrementally increases the sensitivity of the light receptors until the received pattern matches the expected test pattern preprogrammed in the responder unit. This allows the responder unit to be used with a wide variety of visual display units of different definitions (e.g. low resolution home computer TV monitors or high resolution graphics screens).

The visual display terminal presents displayed characters in a left to right order and the rightmost receptor of the three receptors in the responder is used as a gating pulse to synchronised broadcast signalling and receptor sampling. For example, if the third flashing character is "on" then the other two character positions can be sampled by the responder unit. This allows the responder unit to be largely independent of the host computer system's response performance. For example, if the host system or network is heavily loaded with users and programs, then the overall response at a particular workstation (L) may degrade temporarily. In this case the responder timing unit will automatically adjust to sample data at the now slower speed of transmission.

Would-be cipher code-breakers might attempt to isolate a responder unit, and by simulating the screen transmissions, attempt to decode the responses. To prevent this happening, functions fnT and fnR are chosen to contain redundant data, part of this data containing context dependent flags for example, parity or cyclic redundancy check CRC-16 digits. These ensure an expected "footprint" of data is received; if dummy data is received in an attempt to elicit response numbers, random numbers are presented by the responder unit. This may indeed occur legitimately if the gain on the receptors' circuitry is wrongly set. Repeated attempts, however, cause key bit erases in the EEPROM and render the responder unit inoperable (self destruct).

The monitoring routines at the central host computer are designed to ensure that the (ITN) routines described above are not sabotaged. It is possible that programmers at the central computer site, with access to the complete range of software development utilities, such as language compilers, interactive editors and debugging utilities, could systematically disect the protected program to isolate all the possible occurrences of the (INT) routines. It would then be possible to insert or replace the existing code with code designed to bypass the interrogation modules. Such an achievement, although lengthy and difficult, would circumvent the protection. To prevent this possibility, separate (MON) program routines are installed after the main program is installed (preferably by a person administratively separate from the programming department) to be executed in the same data context as the protected program, that is to say, the (MON) routines can read the protected program's code and data. These (MON) routines will compare on a bit-by-bit basis, the binary instructions contained in the (INT) routines. If any variance is found, the (MON) routines take appropriate defensive action e.g. logging users, preventing disk write access, etc. Since these checking (MON) routines are passive, they may be marked as read only code with no source code given to the programmers. A system auditor (separate from the system manager) may be allowed to choose which (MON) routines are executed at a particular session, and the (MON) routines may themselves contain (INT) routines with subsequent interrogation of the system auditor's responder unit, to verify that these routines are present and executing appropriate surveillance.

Hardware "spoilers" may be provided to further complicate the encryption and decryption cipher systems used on the data transmitted between the (INT) routines and the responder unit. The spoilers comprise circuitry which examines the data transmitted (Tj) to check for a predetermined bit pattern sequence. If such a bit pattern sequence is detected, then the transmitting routines and the responder routines interpret the data in a fundamentally different way from the normal processing, for example, if the last three digits at bit level are 101, then the spoiler will assume the particular data transaction was to be ignored, and the session generation numbers (PG) and (RG) would not be updated. Correspondingly, the responder units would take appropriate action on detection of this bit string "101". These devices, which can be inserted at the very last manufacturing operation, provide an additional complication in decoding the interactions, and are designed to prevent fraud by personnel at the supplier of the security system, or by personnel responsible for incorporating the (INT) routines into the protected programs at the central host computer site.

As described above, the responder circuitry forming the cipher system (Fig. 7) should be carefully assembled to make the unit resistant to sustained and expert attempts at decoding the logic and method of operation. An important component of the cipher system is an EEPROM (Electrically Erasable Programmable Read Only Memory) device, which may be for example selected from the Motorola M6805 and M68HC11 microcomputer chip families.

On computer chip EEPROMs have two features. First they can store data permanently (without power) and secondly, unlike the standard EPROM which must be subjected to periods of exposure with ultra violet light which erases the entire EPROM array, the EEPROM can erase specific stored data under program control. This second feature is used in the self destruct mechanism.

The responder unit keeps key information like U,P,L,S,T and some function parameters associated with fnR within the EEPROM. Standard on-chip ROMs are susceptible to theft by expert attack. The ROM mask layer which contains the bit-level information of the computer program is optically readable using a high power microscope. The program mask layer bit value for a given address can be determined by deciphering the physical arrangement of the address and data bus decode logic. Another potential means of obtaining ROM based information is to configure the unit in factory test mode. All microcomputers are tested for circuit function integrity before delivery to a customer. Since testability is designed into the unit, a person with sufficient knowledge of a particular manufacturer's product line, could configure a microcomputer in its test mode and read its ROM contents.

The single chip microcomputer with EEPROM on chip has a security feature accessed via the EEPROM program control register. When the security bit is enabled the chip cannot be configured in factory test mode. In order to disable the security feature, a bulk erase must be performed of the entire EEPROM array, losing the preprogrammed context information.

EEPROM cell values cannot be optically read since they are charge values. Scanning electron microscopes cannot be used because the floating gate which holds the electrical charge for the bit logic value will drain, that is to say, the electron beam will discharge the EEPROM cell. The employment of a tamper sensitive device which detects physical opening of the responder unit's casing and triggers self destruct action on the memory in the responder unit prevents would-be hackers physically examining the circuits in the responder unit and prevents in line circuit examination.

The above described system may be used with a large non-homogenous computer network with a variety of distributed databases and programs available for a wide population of users. Some of this data and some of the programs may be more sensitive than others and a control and arbitration system is required to allow mandatory access control to these specific sensitive datafiles or programs so that only users who have corresponding clearance to access this data or execute these programs can be recognised and policed. It is a prerequisite that a rigorous and consistent marking system has been undertaken which delineates specific datasets of the database and particular programs with appropriate sensitivity labels. For example, a particular database may be deemed unclassified, or it may be deemed classified but sensitive and limited to particular groups endowed with special privileges. Wherever these sensitivity ratings are enacted they should be done in a consistent manner.

The next requirement of the system is to determine the levels of user clearance - these "user profiles" of particular users determine their rights to access particular databases or programs. For example, users may have Read Only access to a database. The next level could be the ability to Change records. The level after that could be the ability to Create new records on the database and the level after could be the ability to Delete records. Alternatively, these levels may relate to payment authorisation levels, for example level "one" would be the ability to approve payment of cheques up to 10,000; level "two" could be the ability to approve payment of cheques up to 20,000; level "three", the ability to approve payment of cheques up to 100,000. Alternatively, such user clearance levels could be related to access priveleges on datasets, for example the ability to enquire on all UK suppliers. The next level could be enquiry facilities for all European suppliers. Whatever the particular application, there will be a corresponding set of user clearance levels.

A conventional control and arbitration system may be used in association with the present invention. Conventional systems typically comprise a central data base in which user profiles are stored. Each time a decision has to be taken to grant or refuse an access request the control data base must be consulted. This communications requirement occupies a significant proportion of the capacity of large computer systems. The present invention makes it possible to reduce or eliminate the communications requirement as described below.

The system of the present invention can incorporate a control and arbitration system which relies upon data stored in the responder unit. A block of EEPROM in each of the responder units is assigned specifically to hold user profile matrices. Further, changes are made to the program in the responder unit so that it can detect additional instructions from the interrogation transmissions which include "Can you do this?" demands. Further additional commands can act as mandates to change specific information held in the user profiles. This information could include personnel identification numbers associated with specific access requirements to specific datasets or programs. These commands are explained more fully below.

The interrogation routines transmit data directly to the responder units. Embedded in these transmissions are different types of questions. Obvious examples include "Who are you?" as well as "Are you still there?". More specifically questions can be asked concerned with authorisation: "Can you do this?". We can also instigate commands to dynamically change in the responder unit specific information, for example personnel identification numbers attached to accessing specific programs or databases. This will allow, for example, the interrogation routines to change in real time a particular personnel identification number connected with a particular category of programs or databases so that the users would have to change their personnel identification numbers to regain entry into the system. This provides a dynamic and moving target for any would-be hacker.

As previously described we assume that a comprehensive marking process has been undertaken classifying categories of programs into various subsets and classifying databases or subsets of the databases into specific categories. These categories then are marked with particular sensitivity labels, and in order for these programs or data to be accessed, a corresponding user level clearance is required.

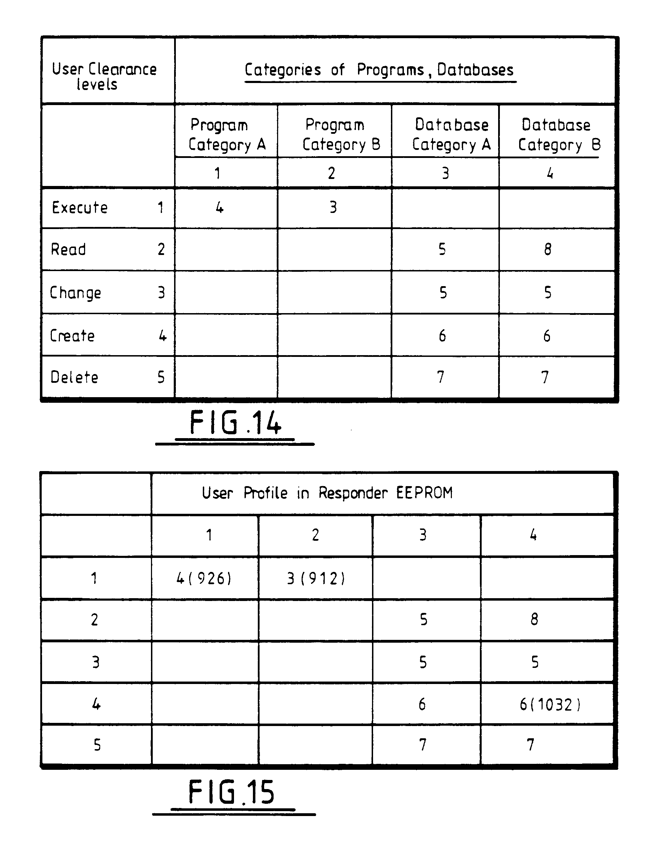

Figs. 14 and 15 illustrate an example of how to construct a user profile matrix which will allow groups of users with different clearances to have access mediated between them and the resources they wish to utilise. Let us suppose that program category A relates to sets of account programs specifically for paying suppliers. Let us suppose that program category B relates to sets of accounts for invoicing customers. Let us suppose that database category A relates to the main suppliers of the company and database B relates to details concerning personnel. Various user clearance levels identified by numbers are then defined and these could be allocated as in the following example:

```
1,1   4   Can only authorise payment of up to
          20,000.
1,2   3   Can only invoice for own cost centre
2,3   5   Can only read UK suppliers
2,4   8   Can only read own department's
          personnel
3,3   5   Can only change existing UK suppliers
          address files
3,4   5   Can only change own department's
          personnel files
4,3   6   No create access
4,4   6   Can only create own department's
          personnel files
5,3   7   Cannot delete
5,4   7   Cannot delete
```

Program Category A    Set of Purchase ledger accounting programs
Program Category B    Set of Sales ledger accounting programs
Database Category A   Set of Worldwide suppliers
Database Category B   Set of Personnel records

The matrix shown in Fig. 15 allocates the clearance level numbers taken from the table of Fig. 14 to a responder unit EEPROM in an easily accessible way. Optional further identification numbers (PIN numbers) which may be required before complete access is granted may also be included. These PIN numbers can be changed through interrogation routines as discussed above. The numbers from the table of Fig. 14 may be translated to the matrix of Fig. 15 with suitable encryption. The manner of arbitration using the matrix of Fig. 15 is explained below.

The interrogation routines are triggered at particular menu options. For example, attempts to execute the accounts program will result in the transmission to the responder units of a command seeking authorisation together with a random number. The command specifically interrogates the responder units user profile column 1,1, and this number, together with any PIN number, is used with the random number on a fixed mathematical function to obtain another number which is displayed to the user and keyed in by the user. The keyed in number is transmitted back to the interrogation routines. The interrogation routines know the random number transmitted, know what should be expected in the responder unit's matrix 1,1, can perform a similar computation to that performed in the responder unit, and see whether the number returned satisfies a particular methematical equation. If it does, all is well. If it does not it reports a fault to the higher level user programs which can then determine what action to take, for example, whether monitoring action is required, whether any destructive or defensive mechanisms need to take place, or whether a re-try by the user is permissble. Preferably, the final function in the host subroutines is intractable in the sense that solutions are difficult to compute or derive. This makes it extremely difficult for hose system programmers and developers to guess valid solutions to the tests in the interrogation subroutines. For example, the roots of (x-r1) (x-r2) ... (x-rn) = O are obvious but if the equation is expanded to collect like terms the roots are difficult to find for large values of n and complex numbers, r. Further information on intractable functions may be obtained from "Computers and Intractability, a Guide to the Theory of NP Completeness" by M.R. Garey and D.S. Johnson, published by W.H. Freeman & Co. New York, 1979.

It ia also possible to transmit a command by a responder unit which actually changes a specific element in the user profile matrix, for example, PIN numbers. Thus, it is possible to dynamically change data in a particular users' responder to increase or decrease user clearance levels or modify personnel identification numbers. This, for example, allows a security manager to dynamically adjust the access to programs or databases based on changes in commercial philosophy, for example if one of the subsidiaries of an organisation was to be sold off it might be prudent for the particular user base attached to that subsidiary to have its access privileges limited or removed.

Thus, the invention provides the following features:

(1) The authorised user is provided with a stand-alone, closed responder unit capable of accepting data from a standard computer workstation and responding with a displayed number derived from the accepted data;

(2) Protected programs can be stopped on a random basis and restarted only after interrogation of a user's responder;

(3) The system can prevent the use of protected programs at non-authorised locations;

(4) The system can prevent the use of protected programs at non-authorised times;

(5) The system can prevent an unauthorised user of a program accessing a network or multi-user computer system;

(6) The system can prevent users on networks of computers, either local networks or remote networks, from illegally executing programs or accessing databases for which they do not have appropriate access privileges;

(7) The system can limit physical access to or the processing of specific computer transactions to only an authorised user at an authorised time in an authorised location. Existing standard computer workstations can be used without changes to the hardware implementations or software operating system implementations;

(8) The responder can be protected against physical examination;

(9) Simulated use of the responder unit by would-be code breakers can be prevented;

(10) The system can be operated from standard workstations in varying system load conditions;

(11) Program bypasses at the host computer site by central site programmers can be prevented;

(12) Fraud by supplier or high-level principals can be prevented;

(13) Suspected illegal users can be monitored.

The system capabilities can be summarised as follows:

## Identification

The system provides means to identify users through their individual responder units.

## Accountability

The system provides means to detect illegal access and initiate audit logging of illegal attempted transactions.

## Assurance

The system contains mechanisms independent of main application programs allowing separate system auditing to monitor that security interrogation routines are present and operational.

## Continued protection

The system provides means to repeatedly interrogate users at system security manager determined levels of incidence at prescribed or random intervals. It is also possible to dynamically change individual levels of access requiring changes in authorisation or personal identification numbers.

## Authorisation

The system provides means to implement discretionary security controls mediating between user requests for system resources such as datafiles and programs and their individual clearance levels.

## Claims

1. A secure computer system, comprising at least one terminal (L) incorporating a display screen and a keyboard, means to suspend access to the system from the terminal until a user (U) keys in a code via the keyboard, means for displaying on the display screen information from which the code can be derived when it is required by the system for the code to be keyed in to permit access to the system, and at least one responder unit (R) for detecting the displayed information, deriving the code from the detected information, and displaying the derived code to enable the user to key in the code, characterised in that the responder comprises a memory (13) the content of which is electrically changeable, the memory storing data upon which depends the relationship between the derived code and the displayed information, and means operating in response to the detected displayed information for altering said data stored in the memory.

2. A secure computer system according to claim 1, comprising means for initiating interrogation routines (INT) to suspend access to the system during the course of a session of use of the system, each interrogation routine causing the displaying means to display information on the screen and preventing access to the system until a code derivable from the displayed information by the responder unit (R) has been keyed in.

3. A secure computer system according to claim 2, wherein the initiating means initiate interrogation routines (INT) at random intervals.

4. A secure computer system according to claim 2 or 3, comprising means for initiating monitoring routines (MON) to validate that the interrogation routines are present and operational.

5. A secure computer systems according to claim 2, 3 or 4 further comprising means for storing a session generation number within the responder unit (R) and within the computer system, the stored session generation number within the responder unit and within the computer system being incremented on each exchange of information between the responder unit and the computer system resulting from initiation of an interrogation routine, and means being provided to deny access to the computer system if there is a discrepancy between the two stored session generation numbers.

6. A secure computer system according to any preceding claim, comprising means within the or each responder unit for storing information related to the permitted access to the system of an authorised user of the responder unit, and means for initiating an interrogation routine (INT) when any one of a predetermined series of access requests is made from the terminal, the initiated interrogation routine causing the displaying means to display information on the screen and preventing access to the system until a code derivable from the displayed information in conjunction with data associated with permitted access information stored in the responder unit (R) has been computed by the responder unit and the resulting displayed code has been keyed in.

7. A secure computer system according to any preceding claim, wherein the responder unit (R) comprises light sensitive receptors (11) for detecting changes in the illumination level of a display screen against which the responder unit can be held, at least one of the light sensitive receptors generating a clock signal which is used to gate the output of the or each of the other light sensitive receptors.

8. A secure computer system according to claim 7, comprising a first pair of light sensitive receptors (11) positioned to detect the illumination level of two spaced apart regions (14, 15) of the terminal display upon which two bit parallel code data is displayed, and a third light sensitive receptor (11) which is positioned to detect the illumination level of a third region (16) of the terminal display to generate the clock signal.

9. A secure computer system according to any preceding claim, wherein the responder unit comprises a sealed enclosure, means for detecting opening of the enclosure, and means responsive to detection of opening of the enclosure to erase data stored in the responder unit (R) upon which data the relationship between displayed information and the code which can be derived from that information depends.

10. A secure computer system according to any preceding claim, comprising hardware spoilers adapted to check for a predetermined bit pattern sequence in information transmitted for display on the terminal display and codes keyed into the keyboard, and to control the system response depending upon whether or not the predetermined bit pattern sequences are detected.

EP 0 236 412 B1

**Revendications**

1. Système d'ordinateur protégé, comprenant au moins un terminal (L) comportant un écran d'affichage et un clavier, un moyen de suspension d'accès au système depuis le terminal jusqu'à ce qu'un utilisateur (U) tape un code via le clavier, un moyen d'affichage sur l'écran d'affichage des informations à partir desquelles le code peut être dérivé lorsque le système exige que le code soit tapé pour permettre d'avoir accès au système, et au moins un bloc répondeur (R) destiné à détecter les informations affichées, à dériver le code à partir des informations détectées, et à afficher le code dérivé pour permettre à l'utilisateur de taper le code, caractérisé en ce que le répondeur comprend une mémoire (13) dont le contenu est capable d'être changé électriquement, la mémoire mémorisant des données desquelles dépend la relation entre le code dérivé et les informations affichées, et un moyen fonctionnant en réponse aux informations affichées détectées destiné à l'altération desdites données mémorisées dans la mémoire.

2. Système d'ordinateur protégé selon la revendication 1, comprenant un moyen destiné à l'initiation de routines d'interrogation (INT) pour suspendre l'accès au système pendant le déroulement d'une session d'utilisation du système, chaque routine d'interrogation faisant afficher au moyen d'affichage des informations sur l'écran et empêchant l'accès au système jusqu'à ce qu'un code capable d'être dérivé à partir des informations affichées par le bloc répondeur (R) soit tapé.

3. Système d'ordinateur protégé selon la revendication 2, dans lequel le moyen d'initiation initie des routines d'interrogation (INT) à intervalles aléatoires.

4. Système d'ordinateur protégé selon la revendication 2 ou 3, comprenant un moyen destiné à l'initiation de routines de contrôle (MON) pour valider que les routines d'interrogation sont présentes et opérationnelles.

5. Système d'ordinateur protégé selon la revendication 2, 3 ou 4, comprenant en outre un moyen pour mémoriser un nombre de génération de session au sein du bloc répondeur (R) et au sein du système d'ordinateur, le nombre de génération de session mémorisé au sein du bloc répondeur et au sein du système d'ordinateur étant incrémenté lors de chaque échange d'informations entre le bloc répondeur et le système d'ordinateur résultant de l'initiation d'une routine d'interrogation, et un moyen étant prévu pour refuser l'accès au système d'ordinateur s'il existe une différence entre les deux nombres de génération de sessions mémorisés.

6. Système d'ordinateur protégé selon une revendication précédente quelconque, comprenant un moyen au sein du ou de chaque bloc répondeur destiné à mémoriser des informations relatives à l'accès autorisé au système par un utilisateur homologué du bloc répondeur, et un moyen destiné à l'initiation d'une routine d'interrogation (INT) lorsque l'une quelconque d'une série déterminée de demandes d'accès est effectuée à partir du terminal, la routine d'interrogation initiée faisant afficher au moyen d'affichage des informations sur l'écran et empêchant l'accès au système jusqu'à ce qu'un code capable d'être dérivé des informations affichées en conjonction avec des données associées à des informations d'accès autorisé mémorisées dans le bloc répondeur (R) soit calculé par le bloc répondeur et que le code résultant affiché soit tapé.

7. Système d'ordinateur protégé selon une revendication précédente quelconque, dans lequel le bloc répondeur (R) comprend des récepteurs (11) sensibles à la lumière destinés à la détection de changements dans le niveau d'illumination d'un écran d'affichage contre lequel le bloc répondeur peut être maintenu, au moins un des récepteurs sensibles à la lumière générant un signal d'horloge qui est utilisé pour déclencher la sortie des ou de chacun des autres récepteurs sensibles à la lumière.

8. Système d'ordinateur protégé selon la revendication 7, comprenant une première paire de récepteurs (11) sensibles à la lumière positionnée pour détecter le niveau d'illumination de deux régions (14, 15) espacées l'une de l'autre de l'affichage du terminal sur lequel des données de code double en parallèle sont affichées, et un troisième récepteur (11) sensible à la lumière qui est positionné pour détecter le niveau d'illumination d'une troisième région (16) de l'affichage du terminal pour générer le signal d'horloge.

14

**9.** Système d'ordinateur protégé selon une revendication précédente quelconque, dans lequel le bloc répondeur comprend une enceinte scellée, un moyen destiné à la détection de l'ouverture de l'enceinte, et un moyen répondant à la détection d'ouverture de l'enceinte pour effacer des données mémorisées dans le bloc répondeur (R), données desquelles dépend la relation entre les informations affichées et le code qui peut être dérivé de ces informations.

**10.** Système d'ordinateur protégé selon une revendication précédente quelconque, comprenant des capteurs de tentatives nonautorisées adaptés pour vérifier une séquence à motif de bit déterminée dans les informations transmises pour affichage sur l'affichage du terminal et des codes tapés sur le clavier, et pour commander la réponse du système selon si des séquences à motif de bit déterminées sont détectées ou non.

**Patentansprüche**

**1.** Gesichertes Rechnersystem, umfassend mindestens ein Endgerät (L) mit einem Bildschirm und einer Tastatur, eine Einrichtung zum vorübergehenden Ausschließen des Zugriffs auf das System vom Endgerät, bis ein Benutzer (U) mittels der Tastatur einen Code eingibt, eine Einrichtung zum Anzeigen von Information auf dem Bildschirm, aus der der Code abgeleitet werden kann, wenn das System zum Ermöglichen des Zugriffs auf das System die Eingabe des Codes erfordert, und mindestens eine Ansprecheinheit (R) zum Erfassen der angezeigten Information, Ableiten des Codes aus der erfaßten Information und Anzeigen des abgeleiteten Codes, um dem Benutzer die Eingabe des Codes zu ermöglichen, dadurch gekennzeichnet, daß die Ansprecheinheit folgendes umfaßt: Einen Speicher (13), dessen Inhalt elektrisch veränderbar ist, wobei der Speicher Daten speichert, von denen das Verhältnis zwischen dem abgeleiteten Code und der angezeigten Information abhängt, und eine auf die erfaßte, angezeigte Information ansprechende Einrichtung zur Änderung der im Speicher gespeicherten Daten.

**2.** Gesichertes Rechnersystem nach Anspruch 1, umfassend eine Einrichtung zum Auslösen von Abfrageroutinen (INT) zum vorübergehenden Ausschließen des Zugriffs auf das System während des Verlaufs einer Systemanwendungs-Sitzung, wobei veranlaßt durch jede Abfrageroutine die Anzeigeeinrichtung Information auf dem Bildschirm anzeigt und der Zugriff auf das System verhindert wird, bis ein aus der angezeigten Information von der Ansprecheinheit (R) ableitbarer Code eingegeben worden ist.

**3.** Gesichertes Rechnersystem nach Anspruch 2, wobei die Auslösungseinrichtung Abfrageroutinen (INT) in zufälligen Abständen auslöst.

**4.** Gesichertes Rechnersystem nach Anspruch 2 oder 3, welches zur Bestätigung, daß die Abfrageroutinen vorhanden und betriebsbereit sind, eine Einrichtung zur Auslösung von Überwachungsroutinen (MON) umfaßt.

**5.** Gesichertes Rechnersystem nach Anspruch 2, 3 oder 4, welches ferner eine Einrichtung zum Speichern einer Sitzungs-Erzeugungsnummer innerhalb der Ansprecheinheit (R) und innerhalb des Rechnersystems umfaßt, wobei die gespeicherte Sitzungs-Erzeugungsnummer innerhalb der Ansprecheinheit und des Rechnersystems bei jedem durch Auslösung einer Abfrageroutine bewirkten Informationsaustausch zwischen der Ansprecheinheit und dem Rechnersystem inkrementiert wird, und wobei eine Einrichtung zum Verhindern des Zugriffs auf das Rechnersystem vorgesehen ist, sollte eine Diskrepanz zwischen den beiden gespeicherten Sitzungs-Erzeugungsnummern bestehen.

**6.** Gesichertes Rechnersystem nach einem der vorstehenden Ansprüche, umfassend innerhalb der bzw. jeder Ansprecheinheit eine Einrichtung zum Speichern von Information, die mit dem zulässigen Zugriff auf das System durch einen bevollmächtigten Benutzer der Ansprecheinheit in Zusammenhang steht, und eine Einrichtung zum Auslösen einer Abfrageroutine (INT), wenn eine beliebige einer vorgegebenen Reihe von Zugriffsanforderungen vom Endgerät aus gemacht wird, wobei veranlaßt durch die ausgelöste Abfrageroutine die Anzeigeeinrichtung Information auf dem Bildschirm anzeigt und der Zugriff auf das System verhindert wird, bis ein Code, der aus der angezeigten Information in Verbindung mit Daten, die der in der Ansprecheinheit (R) gespeicherten Information für zulässigen Zugriff zugeordnet sind, ableitbar ist, von der Ansprecheinheit berechnet und der sich ergebende angezeigte Code eingegeben worden ist.

**7.** Gesichertes Rechnersystem nach einem der vorstehenden Ansprüche, wobei die Ansprecheinheit (R) lichtempfindliche Empfänger (11) zum Erfassen von Änderungen in der Beleuchtungsstärke eines Anzeigebildschirms, gegen den die Ansprecheinheit gehalten werden kann, umfaßt, wobei mindestens einer der Lichtempfindlichen Empfänger ein Taktsignal erzeugt, welches zum Aussteuern der Ausgabe des oder jedes der anderen lichtempfindlichen Empfänger verwendet wird.

**8.** Gesichertes Rechnersystem nach Anspruch 7, umfassend ein erstes Paar von lichtempfindlichen Empfängern (11), die so angeordnet sind, daß sie die Beleuchtungsstärke zweier voneinander beabstandeter Bereiche (14, 15) der Endgerätanzeige, auf der parallele 2-Bit-Codedaten angezeigt sind, erfassen, und einen dritten lichtempfindlichen Empfänger (11), der so angeordnet ist, daß er die Beleuchtungsstärke eines dritten Bereiches (16) der Endgerätanzeige erfaßt und so das Taktsignal erzeugt.

**9.** Gesichertes Rechnersystem nach einem der vorstehenden Ansprüche, wobei die Ansprecheinheit folgendes umfaßt: Ein abgeschlossenes Gehäuse, eine Einrichtung zum Erfassen eines Öffnens des Gehäuses, und eine auf das Erfassen eines Öffnens des Gehäuses ansprechende Einrichtung zum Löschen von in der Ansprecheinheit (R) gespeicherten Daten, von denen das Verhältnis zwischen angezeigter Information und dem aus dieser Information ableitbaren Code abhängt.

**10.** Gesichertes Rechnersystem nach einem der vorstehenden Ansprüche, welches Hardware-Einrichtungen zur Verhinderung von unzulässigem Zugriff umfaßt, die derart ausgebildet sind, daß sie die zur Anzeige auf der Endgerätanzeige übertragene Information und in die Tastatur eingegebenen Codes auf vorgegebene Bitmusterfolgen überprüfen, und je nachdem, ob die vorgegebenen Bitmusterfolgen erfaßt werden oder nicht, das Ansprechen des Systems regeln.

FIG.1

CENTRAL PROCESSING UNIT

DISCS

MODEM

MODEM

LOCAL USER
(DUMB)

REMOTE USER
(DUMB)

REMOTE USER
(INTELLIGENT)

FIG.2

FIG.3

DISCS          DISCS

PROTECTED  PROGRAM(P)

HOST  COMPUTER

MODEM

⊘ = CLOCK(T)

RESPONDER UNIT(R)

MODEM

WORKSTATION(L)

FIG.5

USER
(U)

MODEM

MODEM

GATEWAY TO OTHER
NETWORKS

DISCS

DISCS

DISCS

PUBLIC
NETWORKS

MODEM

HOME COMPUTER

FIG. 4

FIG.6

FIG.7

14    15    16

11    11    11

## FIG. 8

11

17

18

19

## FIG. 9

PROGRAM (P) FLOWCHART

START PROGRAM

INITIALISATION
SET PIF = 1
SET PG = Go

(A) CONTINUE PROGRAM

CHECKPOINT, RANDOM HIT ON
TARGET ?

No

Yes

INTERRUPT USER (Jth OCCURENCE IN
SESSION

CALCULATE
$fnC(j) = fnC (U, L, P, S, tj)$

CALCULATE
$fnP(j) = fnP (xj, fnC(j), PG$

CALCULATE
$fnT(j) = fnT (xj, PIF, PG)$

CALCULATE
$Tj = INT. ENC (fnT(j))$

TRANSMIT Tj to RESPONDER

SET TIMEOUT

Cont.

FIG.10

Cont.

WAIT

TIMEOUT EXPIRED — Yes → (B)

No

No

USER RESPONSE?

Yes

INPUT RESPONSE
$fnQ(j)$

Is $fnV (fnP(j), fnQ(j)) = o$ — No → (B)

Yes

INCREMENT G

SET INITIALISATION FLAG, PIF = 0

(A)

(B) TAKE DEFENSIVE ACTION E.G. PROHIBIT
ACCESS TO DATA ON PROGRAM, ACTIVATE
LOGGING AND MONITORING OF (U).
DESTROY USER DATA CONTEXT.

(A) FIG.11

RESPONDER UNIT (R) FLOWCHART

START SESSION

INITIALISATION
SET RIF = 1

A

WAIT TO RECEIVE
TRANSMITTED DATA

No — ANY DATA RECEIVED

Yes

RECEIVED Tj, Jth OCCURRENCE

DECODE xj, PIF, G
FROM fnR (Tj)

IS RIF=1 — No → B

Yes

IS PIF=1 — Yes → C

No

SET fnQ(j)=RANDOM NUMBER

D

**FIG. 12**

B — IS PIF = RG or RG+1 — Yes → C

No

SET fnQ(j)=RANDOM NUMBER

D

C — SET RG = PG

CALCULATE
fnC(j) = fnC(U,L,P,S,tj)

CALCULATE
fnQ(j) = fnQ(xj, fnC(j), PG)

D — DISPLAY RESPONSE
fnQ(j)

SET RIF = 0

A

**FIG. 13**

| User Clearance levels | | Categories of Programs, Databases | | | |
|---|---|---|---|---|---|
| | | Program Category A | Program Category B | Database Category A | Database Category B |
| | | 1 | 2 | 3 | 4 |
| Execute | 1 | 4 | 3 | | |
| Read | 2 | | | 5 | 8 |
| Change | 3 | | | 5 | 5 |
| Create | 4 | | | 6 | 6 |
| Delete | 5 | | | 7 | 7 |

## FIG.14

| | | User Profile in Responder EEPROM | | | |
|---|---|---|---|---|---|
| | | 1 | 2 | 3 | 4 |
| 1 | | 4(926) | 3(912) | | |
| 2 | | | | 5 | 8 |
| 3 | | | | 5 | 5 |
| 4 | | | | 6 | 6(1032) |
| 5 | | | | 7 | 7 |

## FIG.15